# EUROPEAN PATENT SPECIFICATION

(11) **EP 0 654 656 B1**
(45) Date of publication and mention of the grant of the patent: **31.03.1999**
(21) Application number: 94116207.5
(22) Date of filing: 14.10.1994
(51) Int. Cl.: G01M 3/32

(54) **Leak testing with wall projection against clogging**
Leckerfassung mit Wandvorsprung gegen ein Stocken
Essai d'étanchéité avec une avance dans un mur contre le bouchage

(30) Priority: 18.11.1993 US 154079
(43) Date of publication of application: 24.05.1995
(60) Divisional application: 98117404.8
(73) Proprietor: Lehmann, Martin, CH-5610 Wohlen 1 (CH)
(72) Inventor: Lehmann, Martin, CH-5610 Wohlen 1 (CH)
(74) Representative: Troesch Scheidegger Werner AG

(56) References cited:
- EP-A- 0 432 550
- DE-A- 2 218 194
- US-A- 3 813 923
- US-A- 4 905 501
- US-A- 5 150 605
- US-A- 5 199 296

## Description

The present invention relates in general to a method for leak testing of a container, to a test chamber therefor, to a test machine for in-line testing of such containers and to a corresponding use. More particularly, the present invention is for reducing test cycle time and for improving the measuring accuracy.

Methods for leak testing of containers are known in which a pressure difference is applied between the interior and the exterior of a container to be tested as an initial value for latter measuring. Afterwards, a pressure value, which is dependent on the pressure difference installed as the initial value and on leakage conditions of the container to be tested, is measured, as a leak indication.

From the article "Lecksuche mittels Differenzdruckmessungen" by J.T Furness, VFI 4/78, it is generally known to test a container on leakage by monitoring its internal or its external pressure. Thereby, it is described that, the smaller that a volume is selected, wherein the time course of pressure is monitored, the more accurate such a measuring will become.

There exists a clear need for shortening the time span necessitated for a test cycle of a container and of improving the accuracy of such tests to be able to detect smallest leakages of such containers.

A method and test chamber for leak testing a container with a substantially flexible wall portion disclosed in applicants' earlier U.S. Patent No. 5 042 291 offer a solution to the aforementioned need wherein the container is introduced into a test cavity, so that the wall portion of the container is spaced from an inner adjacent wall portion of the test cavity with a gap being defined between the wall portion of the cavity and the flexible wall portion of the container. A pressure difference is installed as an initial value between the interior of the container and the gap by applying a pressure at least to the gap which is smaller than a pressure inside the container. The flexible wall portion of the container is supported from its exterior side within the test cavity using a grid or a mesh structured inlay to prevent the flexible wall portion from bending outwardly into contact with the wall portion of the test cavity as a result of the pressure difference. The time course of a pressure prevailing within the gap is measured as a leak indicative signal. A drawback of this technique is, that provision of a mesh or a grid necessitate a separate part which is critical with respect to its form stability, necessitates separate cleaning from time to time and may stick on the container and may be removed therewith out of the test cavity. Furthermore figure 6 in US-A-5 199 296 shows projections at the bottom, but with no possibility of clogging.

Departing from the last mentioned technique, it is an object of the present invention to overcome its drawbacks. This object is resolved by the method of claim 1. Accordingly, the said object is resolved by a test chamber of claim 11.

Remedising of the drawbacks mentioned above leeds to a test machine with at least two inventive test chambers, which operates with significantly reduced service-time-spans. This according to the wording of claim 19. A use is given with claim 20.

Thus, inventively the abutment surface is not anymore formed by a separate part within the test cavity, but is formed by at least one projection of the wall portion of the cavity as an integral part of said cavity wall.

In a first embodiment, according to the wording of claim 2, such abutment surfaces are formed as a distinct pattern, which is machined into the wall of the cavity.

A prefered embodiment, according to the wording of claim 3, has a multitude of such abutment projections, which is formed by the surface roughness of the wall portion of the cavity. Thereby, it becomes possible to supporte the flexible wall portion of the container along a multitude of support surfaces, whereby, between the multitude of projections forming the support surfaces, surface roughness ensures the formation of an intermediate space between which and the inside of the container the pressure difference may be applied. Roughening of the wall of the cavity may be performed by different well-known methods such as blasting, edging and so on.

Depending on how much outwards bending of the containers flexible wall portion shall be admitted, according to the wording of claim 4, the at least one projection forming the support surface, contacts the flexible wall portion of the container once the container is introduced into the cavity and before the pressure difference is applied or, according to claim 5, the said projection with the support surface contacts the flexible wall portion of the container only after the pressure difference is applied.

In a further improved embodiment according to claim 6, the container is mechanically stressed during testing in that a biasing member is pushed from the cavity on a further flexible wall portion of the container. Thereby, mechanical biasing may occur, according to the wording of claim 7, at a flexible wall portion of the container, which is different from the flexible wall portion inventively supported for preventing outwards bending or mechanical biasing may be performed at the same flexible wall portion, which is also supported by the inventive projection according to the wording of claim 8. In a most simple way, mechanical biasing is installed by closing the cavity with the container therein according to the wording of claim 9.

Especially, when the container has at least two flexible wall portions wich are linked along a distinct link-area, by the said biasing technique it becomes possible, according to the wording of claim 10, to specifically stress that link-area as a container portion which is critical with respect to leakage.

Prefered embodiments of the test chamber are specified in the claims 12 to 18.

The inventive technique is especially suited for testing flexible prefilled containers as yoghurt-containers, pouder-containers or so called blisters, so for instance for coffee-pouder, tea, medicament-pouder and so on.

The invention will be more specifically understood when the following detail description is considered in conjunction with the accompanying drawings in which:
Fig. 1 shows schematically in a cross-sectional representation a prior art embodiment of a test chamber for leak testing of cup shaped containers as of yoghurt cups,
Fig. 2 shows a schematic, cross-sectional view of a first embodiment of a test chamber according to the invention,
Fig. 3 is a schematic cross-sectional view of the test chamber of Fig. 2 taken along the line VIII-VIII, the container of Fig. 2 not being shown, so that a distinct pattern of longitudinally extending, intersecting horizontal and vertical channels can be seen.
Fig. 4 is an enlarged view of a portion of the test chamber wall in a second embodiment depicting a roughened surface,
Fig. 5 (not claimed) shows schematically in a cross-sectional representation another embodiment of a test chamber for leak testing of cup-shaped containers such as yoghurt cups, which makes use of prior art supporting mesh according to Fig. 1.

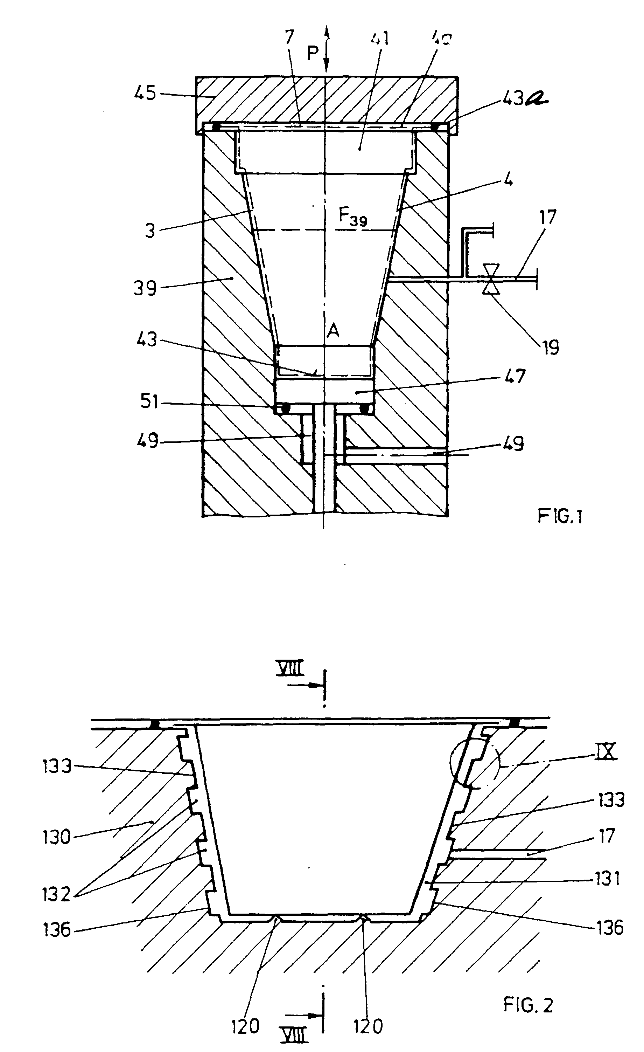

In Fig. 1, there is schematically shown a prior art test chamber. As an example, it is constructed for testing closed containers 3 of substantial truncated cone form, as for testing yoghurt cups, with respect to leakage. A container 3 to be tested and with a covering lid 7 is shown in dashed lines. The inventive test chamber comprises a receptacle 39 which is formed according to the outside form of the container 3. The cross-sectional area of the receptacle 39, F₃₉ diminishes in direction of the central axis A substantially conelike departing from a receptacle opening 41, towards the bottom 43 of the receptacle 39 and defines a cavity which is substantially similar in the sense of geometric similarity with the container 3, so that, when the container 3 to be tested is introduced, there are defined between its wall and the inside wall of the receptacle 39 substantially constant distances.

Adjacent to the opening 41 of the receptacle 39 there is preferably provided a positioning groove for a collar, which is usually provided at such containers to which collar the covering foil-like lid of the container is welded.

The test chamber further comprises a cover 45 which is movingly driven, as shown by reference P , and is moved towards or from the receptacle 39, so as to either sealingly close it with the help of the seals 43 or to open it.

At the bottom of the receptacle 39 there is provided an axially movable and controllably driven piston 47 which is retracted, when a container 3 to be tested is introduced in the test chamber and during the testing of the container, and which, after opening the cover 45, is driven into the test chamber, so as to eject the tested container 3. The piston 47 comprises an enlarged piston head.

At the bottom of the receptacle 39, adjacent to the piston head, a drain sleeve 49 enters into the test chamber, which is sealingly closed by means of the head of the piston 47 by means of seals 51, once the piston 47 is retracted. Thus, after testing a container 3 which was leaking, so that material contained in the container 3 could possibly penetrate into the test chamber, the test chamber may be rinsed after the piston 47 has been driven into the test chamber 31 to eject the leaking container 3. Thus, the test chamber 31 is rinsed and the rinsing liquid will be drained out of the open drain sleeve 49. For further improving rinsing of the test chamber, there may be provided, as at the cover 45, a rinsing liquid feed line, possibly with a nozzle arrangement, to eject rinsing liquid into the test chamber (not shown).

The test chamber, according to Fig. 1, comprises, as again schematically shown, pressure feed and pressure monitoring means to install a pressure difference from the inside of the container into the space 4 between the wall of container 3 and the wall of the test chamber.

Further and as known and therefore not shown in Fig. 1, monitoring means are provided to monitor the pressure in the space 4 which results from the initial pressure difference value installed across the wall of the container 3 as a function of its tightness or leakness.

For leak testing of containers, as for yoghurt-, cream-, tea-coffee-, medicament- etc. cups, blisters, etc. continuously in line with filling and closing operations for such containers, by which leak testing e. g. every container of the production shall be tested, a multitude of test chambers, one of which having been described with the help of Fig. 1, are normally combined to form a test machine. In such a machine the multitude of test chambers according to Fig. 1 are preferably arranged on a turnably driven carousel table (not shown), so that, in line with filling and closing of the containers, all of them are pressure leak tested before these containers are stored ready for package.

For testing of such containers with a flexible wall or at least wall portion by means of applying under-pressure in space 4, portions of the container walls may be pressed on the inner wall of the test chamber. To prevent this it is known to provide a mesh inlay along and slightly distant from the wall of the test chamber, so e.g. in the form of a cone-shaped mesh inlay which is open at its bottom end and in which the container 3 to be tested is introduced. Such a mesh inlay mechanically stabilizes the wall of the container 3 with respect to outwards bending. Thus, with the help of such a mesh inlay it is prevented that the flexible container wall is bent, so as to tightly reside on the inner wall of the test chamber, when under-pressure is applied in the space 4. Possibly pressure equalizing connections are provided between the lower part of the receptacle 39 and the upper part adjacent to the cover 41 to ensure pressure equalization all around a container 3 to be tested, if a cover of the container tends to sealingly separate the lower part volume of the test chamber from the said upper part volume.

Such connections between lower and upper parts of the test chamber to provide for equalization of the pressure may be provided by appropriate grooves at the cover region of the test chamber, linking the lower part of the space 4 with an upper part 4a thereof.

By the inventive technique, illustrated in Fig. 2, it becomes possible to avoid the prior art mesh or grid, which is applied to test containers according to Fig. 1 (not shown).

Instead of employing a mesh inlay for mechanically stabilizing the flexible wall portion of the container with respect to outward bending as a result of a pressure difference between the inside of the container and the remaining volume of the test cavity as was described, according to the inventive test chamber and method as depicted in Figs. 2 to 4 generally, at least portions of the wall of the test chamber itself are structured to, on the one hand, support the flexible side wall of the container with respect to the outward bending as a result of a reduced pressure within the cavity with respect to pressure within the container, and on the other hand, maintain a spacing between the flexible side wall of the container and at least first, relatively recessed portions of the adjacent wall of the test cavity with a gap being defined between at least the first, relatively recessed portions of the inner wall of the test cavity and the flexible side wall such that a pressure difference can be installed between the interior of the container and at least the gap by applying a pressure at least to the gap, which is smaller than the pressure inside the container. This structure of at least portions of the wall of the test chamber itself may be realized by mechanically machining of channels, bores and so on into the test chamber wall by milling, drilling, eroding, etc. A second and prefered possibility is to increase roughness of the surface of at least preselected areas of the test cavity wall. This may be done by, for example, sand blasting or blasting with glass bullets. The two techniques of mechanically machining and of surface structure roughening may be used individually or may be combined selectively for predetermined test chamber surface areas as in the embodiment of Figs. 2 to 4.

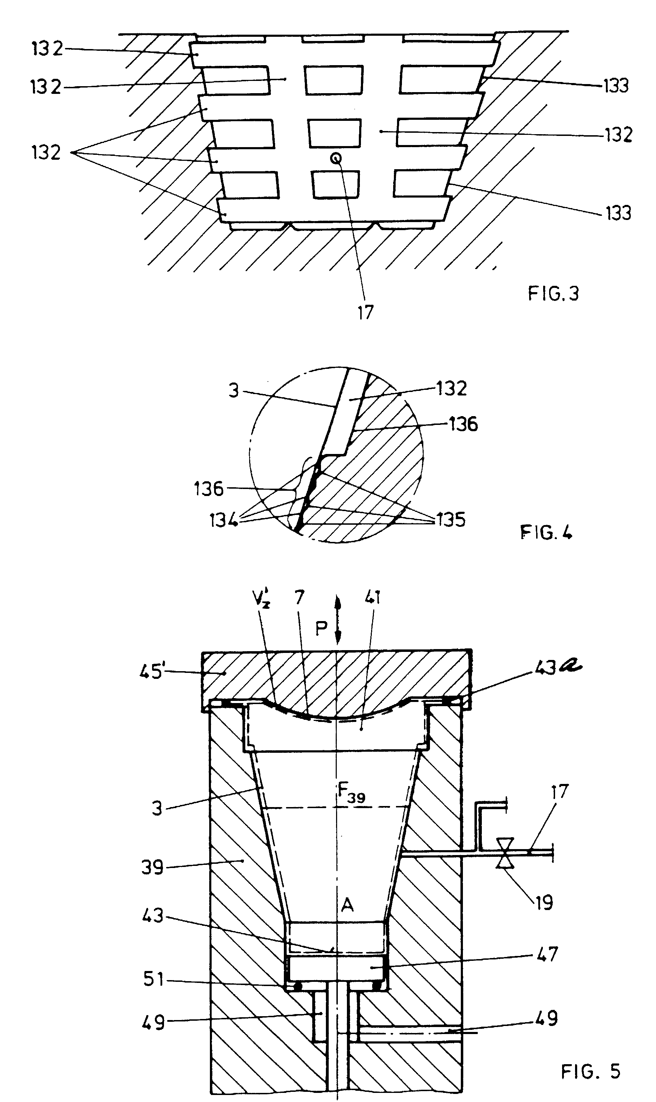

More particularly, in the embodiment of Figs. 2 to 4, there is disclosed a test chamber of the invention which could be used as the test chamber of Fig. 1 or 5. The test chamber of Figs. 2 to 4 comprises a receptacle 130, wherein at least portions of the wall 131 of the receptacle are distinctly structured by machining a plurality of channels 132 therein which extend vertically and horizontally. The channels intersect with one another as seen in Fig. 3. A pressurizing feed line 17 extends from the bottom of one of the channels 132 as shown in Fig. 2. Because the channels intersect with one another, the pressure installed in the test cavity about the container therein is communicated about the container by way of the interconnected channels 132, even though, a flexible side wall of the container may expand outwardly into contact and be supported by relatively raised portions 133 of the wall located between the channels.

The surface of the relatively raised portions 133 or, generally, at least a portion of the cavity or test chamber wall can be roughened as shown in Fig. 4, as by sand blasting or blasting the inner wall of the test cavity with glass bullets to provide relatively raised portions 134 and recessed portions 135 as shown in Fig. 4. With such a roughened surface per se or additionally to a distinct pattern of raised and recessed portions, as shown in Figs. 2 and 3, the flexible side wall of the container can be supported on the high points, that is the relatively raised portions 134, while permitting a pressure difference installed to communicate along relatively recessed roughness-portions 135. The roughening procedure of the test cavity inside wall can be accomplished over the entire wall prior to machining of the channels 132 if such channels are provided. In such a case, relatively recessed portions 136 of the wall 131 formed by the channels 132, e.g. the bottom of the channel 132, need not be roughened as the flexible side wall of the container will be supported outwardly therefrom on raised portions 133 to mechanically stabilize the flexible side wall with respect to further outward bending as a result of an installed pressure difference.

A test chamber and method for leak testing a container according to a still further embodiment of the invention involves reducing the inside volume of the container during testing by mechanically biasing at least a flexible portion of the container from the outside to the inside, thereby increasing the pressure within the container and applying additional stress to selected areas of the container. In a disclosed form of this embodiment, as illustrated in Fig. 5, the test chamber is like that shown in Fig. 1, except that the cover 45' of the test chamber is formed with a projection 140 in the form of a rounded protrusion which biases the flexible lid of the container 3 inwardly, when the cover 45 sealingly closes the test cavity. Thereby, the inside of the container 3 is additionally pressurized and a critical part of the overall container, namely the lid at its bonded seam, is extremely loaded, so that such area may be tested under a selectively increased stress during the installation of a pressure difference as described above with respect to the other embodiments.

Although not shown in Fig. 5 a supporting mesh or grid is provided as was described, so as to prevent the wall of container 3 to be pressed against the cavity wall, due to the pressure difference installed and, additionally, mechanical biasing by cover 45'. Thereby, an area of the container between a first flexible wall portion being mechanically biased, and a second flexible wall portion being prevented to bend outwards is especially stressed as for instance and especially a link-area of said two container wall portions, which is an especially critical part with respect to leaking. In prefered embodiments, the supporting surfaces are realized, as was described in connection with the Figs. 2 to 4, i.e. by a determined pattern of projecting and recessed portions in the cavity wall and/or by roughness of at least portions of the cavity wall.

## Claims

1. A method of leak testing a container with a flexible wall portion, wherein the container is introduced into a test cavity (130), so that said flexible wall portion and an adjacent rigid wall portion (131) of said cavity form an intermediate space, a pressure difference being applied from the inside of said container into said space and a signal depending from said pressure difference being evaluated as a leak indicative signal and wherein bending outwards of said flexible wall portion of said container, which would lead to clogging of said space, is withheld by at least one abutment surface in said space, characterized by the fact, that said abutment surface is formed by at least one projection worked into said adjacent rigid wall portion of said cavity.

2. The method of claim 1 comprising the step of forming a distinct pattern of abutment surfaces (133) by projections.

3. The method of claim 1 comprising providing a multitude of said projections by surface roughness (134, 135) of said adjacent wall portion of said cavity.

4. The method of one of claims 1 to 3, wherein said container is introduced into said cavity, so as to be spaced from said at least one projection before applying said pressure difference.

5. The method of one of claims 1 to 3, wherein said container is introduced into said cavity, so as to contact at least one projection before applying said pressure.

6. The method of one of claims 1 to 5, wherein a biasing member (7) is pushed from said cavity on a further flexible wall portion of said container, so as to mechanically stress said further flexible wall portion of said container.

7. The method of claim 6, wherein said member is formed by a further wall portion of said cavity.

8. The method of one of claims 6 or 7, wherein said further flexible wall portion of said container and said flexible wall portion of said container are formed by the same flexible wall portion of said container.

9. The method of one of claims 6 to 8, wherein said biasing is performed by closing said cavity.

10. The method of one of claims 6, 7 or 9, wherein said further flexible wall portion is linked to said one flexible wall portion along a distinct link-area, said link-area being mechanically stressed by said biasing and said stabilizing.

11. A test chamber for leak testing a container at least one portion of its wall being flexible, comprising a closable test cavity (130), with an inner rigid wall (131), wherein said container can be positioned, at least a portion of said rigid wall (131) of said cavity being arranged so as to be located adjacent and spaced from said flexible wall portion of said container to form a space between said flexible wall portion of said container and said wall portion of said cavity, a pressurizing source to establish a pressure difference from the inside of said container towards said space, at least one abutment surface located in said space so as to withhold said flexible wall portion from bowing outwards to an extent where clogging of said space occurs, characterized by the fact, that said abutment surface (133, 134) is formed by at least one projection, worked into said rigid wall portion of said cavity.

12. The test chamber of claim 11 characterized by the fact, that more than one of said projections (133) are provided forming a distinct projection-pattern in said space.

13. The test chamber of claim 11, characterized by the fact, that a multitude of said projections (134) is formed by surface roughness of said wall portion of said cavity.

14. The test chamber of one of claims 11 to 13, wherein at least one projection (120) is so formed, so that said container once introduced contacts said abutment surface before said source being enabled,

15. The test chamber of one of claims 11 to 13, wherein said at least one projection (133) is so formed, that said container does not contact said abutment surface before said source is enabled.

16. The test chamber of one of claims 11 to 15, characterized by the fact, that it further comprises a biasing member (7) along the wall of said cavity, which biasing member biasing a further flexible wall portion of said container inwardly, once said container is introduced into said cavity and said cavity is closed.

17. The test chamber of claim 16, characterized by the fact, that said biasing member (7) is distinct from said at least one portion (132, 133) of said wall.

18. The test chamber of claim 16, wherein said biasing member (7) is formed by at least one portion of said cavity wall, preferably located at a cover (7) for said cavity and/or at the bottom of said cavity.

19. A test machine for leak testing containers comprising a conveyor for a stream of said containers characterized by at least two of said test chambers according to one of claims 11 to 18.

20. The use of the method according to one of the claims 1 to 10 or of the test chamber according to one of the claims 11 to 18 for flexible prefilled containers, as for yoghurt- or powder-containers or blisters.

## Patentansprüche

1. Verfahren zur Leckerfassung bei einem Behälter mit einem flexiblen Wandabschnitt, bei dem der Behälter derart in einen Testhohlraum (130) eingebracht wird, daß der flexible Wandabschnitt und ein benachbarter Abschnitt (131) der starren Hohlraumwand einen Zwischenraum bilden, wobei zwischen dem Behälterinneren und diesem Zwischenraum eine Druckdifferenz erzeugt und ein von der Druckdifferenz abhängendes Signal als ein Leckanzeigesignal berechnet wird, und wobei ein Auswärtsbiegen des flexiblen Behälterwandabschnitts, das zu einem Zusetzen des Zwischenraums führen würde, durch zumindest eine Anstoßfläche in diesem Zwischenraum verhindert wird, **dadurch gekennzeichnet**, daß die Anstoßfläche durch zumindest einen Vorsprung gebildet wird, der in den benachbarten starren Hohlraumwandabschnitt eingearbeitet ist.

2. Verfahren nach Anspruch 1, dadurch gekennzeichnet, daß mittels Vorsprüngen ein bestimmtes Muster an Anstoßflächen (133) gebildet wird.

3. Verfahren nach Anspruch 1, dadurch gekennzeichnet, daß viele der Vorsprünge durch eine rauhe Oberflächenbeschaffenheit (134, 135) des benachbarten Hohlraumwandabschnitts gebildet werden.

4. Verfahren nach einem der Ansprüche 1 bis 3, dadurch gekennzeichnet, daß der Behälter derart in den Hohlraum eingebracht wird, daß er vor Erzeugen der Druckdifferenz zu zumindest einem der Vorsprünge beabstandet ist.

5. Verfahren nach einem der Ansprüche 1 bis 3, dadurch gekennzeichnet, daß der Behälter derart in den Hohlraum eingebracht wird, daß er zumindest einen der Vorsprünge vor Erzeugen des Drucks berührt.

6. Verfahren nach einem der Ansprüche 1 bis 5, dadurch gekennzeichnet, daß ein Vorbelastungselement (7) vom Hohlraum auf einen weiteren flexiblen Behälterwandabschnitt gedrückt wird, um diesen flexiblen Wandabschnitt zu belasten.

7. Verfahren nach Anspruch 6, dadurch gekennzeichnet, daß das Vorbelastungselement durch einen weiteren Wandabschnitt des Hohlraums gebildet wird.

8. Verfahren nach Anspruch 6 oder 7, dadurch gekennzeichnet, daß der weitere flexible Behälterwandabschnitt sowie der flexible Behälterwandabschnitt durch denselben flexiblen Behälterabschnitt gebildet werden.

9. Verfahren nach einem der Ansprüche 6 bis 8, dadurch gekennzeichnet, daß die Vorbelastung durch Schließen des Hohlraums bewirkt wird.

10. Verfahren nach einem der Ansprüche 6, 7 oder 9, dadurch gekennzeichnet, daß der weitere flexible Wandabschnitt entlang einem bestimmten Verbindungsbereich mit dem einen flexiblen Wandabschnitt verbunden ist, wobei der Verbindungsbereich durch die Vorbelastung und Stabilisierung mechanisch belastet wird.

11. Testkammer zur Leckermittlung bei einem Behälter mit mindestens einem flexiblen Wandabschnitt mit einem abschließbaren Testhohlraum (130), der eine starre Innenwand (131) aufweist, innerhalb derer der Behälter positioniert werden kann, wobei zumindest ein Abschnitt der starren Hohlraumwand (131) benachbart und beabstandet zu dem flexiblen Behälterwandabschnitt angeordnet ist, so daß zwischen dem flexiblen Behälterwandabschnitt und dem Hohlraumwandabschnitt ein Zwischenraum gebildet wird, weiterhin mit einer Druckversorgung, um zwischen dem Behälterinneren und dem Zwischenraum eine Druckdifferenz aufzubauen, mit zumindest einer in dem Zwischenraum angeordneten Anstoßfläche, die verhindert, daß sich der flexible Wandabschnitt derart nach außen biegt, daß der Zwischenraum zugesetzt wird, dadurch gekennzeichnet, daß die Anstoßfläche (133, 134) durch zumindest einen, in den starren Hohlraumwandabschnitt eingearbeiteten Vorsprung gebildet wird.

12. Testkammer nach Anspruch 11, dadurch gekennzeichnet, daß mehrere, ein bestimmtes Vorsprungs-Muster in dem Zwischenraum bildende Vorsprünge (133) vorhanden sind.

13. Testkammer nach Anspruch 11, dadurch gekennzeichnet, daß eine Vielzahl von Vorsprüngen (134) durch die Oberflächenrauhigkeit des Hohlraumwandabschnitts gebildet wird.

14. Testkammer nach einem der Ansprüche 11 bis 13, dadurch gekennzeichnet, daß zumindest ein Vorsprung (120) derart geformt ist, daß der einmal eingebrachte Behälter die Anstoßfläche berührt bevor die Druckversorgung arbeitet.

15. Testkammer nach einem der Ansprüche 11 bis 13, dadurch gekennzeichnet, daß zumindest ein Vorsprung (133) derart geformt ist, daß der Behälter die Anstoßfläche nicht berührt bevor die Druckversorgung angeschaltet ist.

16. Testkammer nach einem der Ansprüche 11 bis 15, dadurch gekennzeichnet, daß weiterhin ein Vorbelastungselement (7) entlang der Hohlraumwand vorgesehen ist, das einen weiteren flexiblen Behälterwandabschnitt nach innen gerichtet vorbelastet, wenn der Behälter in den Hohlraum eingebracht und der Behälter geschlossen ist.

17. Testkammer nach Anspruch 16, dadurch gekennzeichnet, daß das Vorbelastungselement (7) unterschiedlich ist von zumindest einem Wandabschnitt (132, 133).

18. Testkammer nach Anspruch 16, dadurch gekennzeichnet, daß das Vorbelastungselement (7) durch zumindest einen Hohlraumwandabschnitt gebildet wird, der sich vorzugsweise an der Abdeckung (7) des Hohlraums und/oder am Boden des Hohlraums befindet.

19. Testmaschine zur Leckermittlung bei Behältern mit einem Fließband für eine Reihe von Behältern, gekennzeichnet durch zumindest zwei der Test kammern nach einem der Ansprüche 11 bis 18.

20. Verwendung des Verfahrens gemäß einem der Ansprüche 1 bis 10 oder der Testkammer gemäß einem der Ansprüche 11 bis 18 für flexible, vorgefüllte Behälter, wie Yoghurt- oder Puderbehälter oder Gußblasenpackungen.

## Revendications

1. Méthode pour tester l'étanchéité d'un récipient présentant une partie de paroi souple, selon laquelle on introduit le récipient dans une cavité de test (130) de telle sorte que ladite partie de paroi souple et une partie de paroi rigide voisine (131) de la cavité définissent un espace intermédiaire, une différence de pression étant appliquée dans cet espace à partir de l'intérieur du récipient, et un signal dépendant de la différence de pression étant évalué comme signal indiquant une fuite, et selon laquelle le bombement de la partie de paroi souple du récipient vers l'extérieur, qui entraînerait l'obstruction de l'espace intermédiaire, est empêché par au moins une surface de butée prévue dans ledit espace, caractérisée en ce que la surface de butée est définie par au moins une saillie réalisée dans la partie de paroi rigide, voisine, de la cavité.

2. Méthode selon la revendication 1, qui consiste à former un schéma précis de surfaces de butée (133) grâce à des saillies.

3. Méthode selon la revendication 1, qui consiste à prévoir une multiplicité de saillies définies par une rugosité (134, 135) de la partie de paroi voisine prévue dans la cavité.

4. Méthode selon l'une des revendications 1 à 3, selon laquelle on introduit le récipient dans la cavité de telle sorte qu'il soit espacé de la ou des saillies, avant l'application de la différence de pression.

5. Méthode selon l'une des revendications 1 à 3, selon laquelle on introduit le récipient dans la cavité de telle sorte qu'il touche au moins une saillie, avant l'application de pression.

6. Méthode selon l'une des revendications 1 à 5, selon laquelle un élément de contrainte (7) est poussé, à partir de la cavité, sur une seconde partie de paroi souple du récipient, pour solliciter mécaniquement celle-ci.

7. Méthode selon la revendication 6, selon laquelle ledit élément est défini par une seconde partie de paroi de la cavité.

8. Méthode selon la revendication 6 ou 7, selon laquelle la seconde partie de paroi souple du récipient et la partie de paroi souple du récipient sont définies par la même partie de paroi souple du récipient.

9. Méthode selon l'une des revendications 6 à 8, selon laquelle la contrainte est obtenue grâce à la fermeture de la cavité.

10. Méthode selon l'une des revendications 6, 7 ou 9, selon laquelle la seconde partie de paroi souple est reliée à la première le long d'une zone de liaison précise, cette zone de liaison étant sollicitée mécaniquement par la contrainte et par la stabilisation.

11. Chambre de test pour tester l'étanchéité d'un récipient dont une partie au moins de la paroi est souple, comportant une cavité de test (130), apte à être fermée et présentant une paroi rigide intérieure (131), dans laquelle le récipient peut être placé, une partie au moins de ladite paroi rigide (131) de la cavité étant disposée de manière à être voisine et espacée de ladite partie de paroi souple du récipient, de telle sorte qu'un espace soit défini entre ladite partie de paroi souple du récipient et la partie de paroi de la cavité, une source de mise en pression destinée à établir une différence de pression de l'intérieur du récipient vers ledit espace, et au moins une surface de butée située dans ledit espace, pour empêcher la partie de paroi souple de se bomber vers l'extérieur au point d'obstruer ledit espace, caractérisée en ce que la surface de butée (133, 134) est définie par au moins une saillie réalisée dans la partie de paroi rigide de la cavité.

12. Chambre de test selon la revendication 11, caractérisée en ce que plus d'une saillie (133) est prévue, ce qui forme un schéma de saillies précis dans ledit espace.

13. Chambre de test selon la revendication 11, caractérisée en ce qu'une multiplicité de saillies (134) est définie par la rugosité de la partie de paroi de la cavité.

14. Chambre de test selon l'une des revendications 11 à 13, dans laquelle au moins une saillie (120) est formée de telle sorte que le récipient, une fois en place, touche la surface de butée avant la mise en marche de la source de mise en pression.

15. Chambre de test selon l'une des revendications 11 à 13, dans laquelle la ou les saillies (133) sont formées de telle sorte que le récipient ne touche pas la surface de butée avant la mise en marche de la source.

16. Chambre de test selon l'une des revendications 11 à 15, caractérisée en ce qu'elle comporte également un élément de contrainte (7), le long de la paroi de la cavité, qui contraint la seconde partie de paroi souple du récipient vers l'intérieur une fois que le récipient est placé dans la cavité et que la cavité est fermée.

17. Chambre de test selon la revendication 16, caractérisée en ce que l'élément de contrainte (7) est distinct de la ou des parties (132, 133) de la paroi.

18. Chambre de test selon la revendication 16, dans laquelle l'élément de contrainte (7) est défini par au moins une partie de la paroi de cavité, située de préférence sur un couvercle (7) prévu pour la cavité et/ou au fond de la cavité.

19. Machine de test pour tester l'étanchéité de récipients, comportant un convoyeur pour un flux de récipients, caractérisée par au moins deux chambres de test selon l'une des revendications 11 à 18.

20. Utilisation de la méthode selon l'une des revendications 1 à 10 ou de la chambre de test selon l'une des revendications 11 à 18 pour des récipients souples pré-remplis tels que des récipients de yaourt ou de poudre, ou des emballages moulants.
